# EUROPEAN PATENT SPECIFICATION

(11) **EP 2 449 355 B1**
(45) Date of publication and mention of the grant of the patent: **24.01.2018**
(21) Application number: 09780076.7
(22) Date of filing: 01.07.2009
(51) Int. Cl.: G01L 7/08, G01L 9/00

(54) **PRESSURE TRANSMITTER**
DRUCKSENDER
ÉMETTEUR DE PRESSION

(43) Date of publication of application: 09.05.2012
(73) Proprietor: ABB Schweiz AG, 5400 Baden (CH)
(72) Inventor: VOLONTERIO, Eugenio, I-20070 Appiano Gentile (CO) (IT); MARCHESI, Rossano, I-22014 Dongo (CO) (IT)
(74) Representative: De Santis, Giovanni
(86) International application number: PCT/EP2009/058292
(87) International publication number: WO 2011/000423

(56) References cited:
- JP-A- 2005 207 875
- US-A1- 2005 193 825

## Description

The present invention relates to a pressure transmitter of the type used to monitor physical variables in industrial processes, and in particular for sensing the pressure of a fluid process.

As known, pressure transmitters are devices widely utilized in industrial process control systems in order to detect/measure the pressure of a monitored process fluid; such pressure transmitters can perform differential or absolute pressure measurements and therefore are manufactured according to different layouts and models; most common pressure transmitters are those indicated as gauge or absolute pressure transmitters and differential pressure transmitters.

In many applications, the use of pressure transmitters is particularly advantageous since from one or more measurements of relative, differential or absolute pressure, it is possible to indirectly obtain easily values indicative of other physical variables of the fluid controlled which values would be more difficult to be detected directly.

According to a common embodiment, a pressure transmitter of known type currently comprises a main hollow body, sometime indicated as module housing or sensor housing body, which is suitably shaped to house components carrying out the transduction. In particular, this main body includes a measurement chamber housing a pressure sensor; suitable primary electric/electronic circuits for processing signals arriving from the pressure sensor may also be housed into the main hollow body.

A transmitter body is coupled to the sensor housing body and contains further components, such as for example displays for locally displaying the values measured, secondary electronic circuits for processing the signals arriving from the pressure sensor and for communicating with other transmitters or with remote control units, etc.

In order to perform the sensing and measurement operations required, the pressure transmitter comprises a further part or body which must be placed in contact with the process fluid; to this end this additional part is provided with one of more isolation diaphragms which are in fluid communication with the pressure sensor and are suitable to separate the process fluid from the circuit inside the transmitter. At least one of the isolation diaphragms is positioned on this additional part so as to have an external surface exposed directly to the process fluid under monitoring.

This additional part can be a separate body connected to the sensor housing body, for example by screwing or welding, or it can be realized monolithically with the sensor housing body.

Patent US 2005/0193825 discloses a pressure sensor which includes a sensor chip, a pressure receiving diaphragm, a connector case, and a case. A pressure sensing chamber is provided in the connector case and filled with oil. The sensor chip is arranged in the chamber and the diaphragm is fixed to the connector case such that it has contact with the oil and seals the chamber. An O-ring and a welding ring are placed around an edge of the diaphragm and the chamber between the diaphragm and the connector case. The diaphragm is fixed to the connector case via the O-ring and the welding ring and fixed. An inner portion of the welding ring is formed such that it can be placed between the sensor chip, wires, and the diaphragm in the chamber.

At the current state of the art, although pressure transmitters of known type adequately perform the tasks they are required to execute, there is still room and desire for further improvements of their structure and functioning.

In particular, some possible drawbacks of known pressure transmitters may result from the way the isolation diaphragms, and more specifically the isolation diaphragms which directly interface with the process fluid under control, are positioned on the body supporting them, especially when pressure transmitters are used in very aggressive environments.

In fact, an isolation diaphragm is usually constituted by a thin metallic membrane which is suitably welded onto its supporting body; when the pressure transmitter is intended for being used in special applications, e.g. environments with hot temperatures, and/or abrasive or corrosive process fluids and so on, the isolation diaphragm is made of special materials, such as nickel alloys.

When this thin membrane made of special material is welded on the supporting body which is usually made of a common metallic material such as a stainless steel, it may happen that the thin membrane partially melts and mixes with the stainless steel of the supporting body.

Hence, such a welding process, in addition to be quite difficult, results in a welding seam which is to some extent defective; what is more important, the mechanical characteristics of the isolation diaphragm are deteriorated and the isolation diaphragm itself may have one or more points of inception of corrosion, and in some cases the diaphragm should be even discarded.

The main object of the present invention is to address and overcome these problems; accordingly, there is provided a pressure transmitter comprising:
- a sensor assembly having a hollow body housing a pressure sensor; and
- a support body which is made of a first material.

The pressure transmitter according to the present invention is in particular characterized in that it further comprises:
- an interface body which is connected to said support body and is made of a second material different from said first material; and
- at least a first isolation diaphragm which is fixed onto said interface body, said first isolation diaphragm being in fluid communication with said pressure sensor and suitable for interfacing with a process fluid, wherein said first isolation diaphragm is made of said second material. Further characteristics and advantages of the invention will be more apparent from the description of preferred, but non-exclusive, embodiments of the pressure transmitter according to the invention, illustrated by way of a non-limiting example in the accompanying drawings, wherein:
   Figure 1 is a schematic cross-section view illustrating a first embodiment of the pressure transmitter according to the invention;
   Figure 2 is a schematic view illustrating, partially in cross-section, a second embodiment of the pressure transmitter according to the invention;
   Figure 3 is an enlarged view of particular "A" of figure 2.

In the following description and the above identified figures, components equal or functionally equivalent to each other in the two embodiments will be indicated for the sake of simplicity by the same reference number.

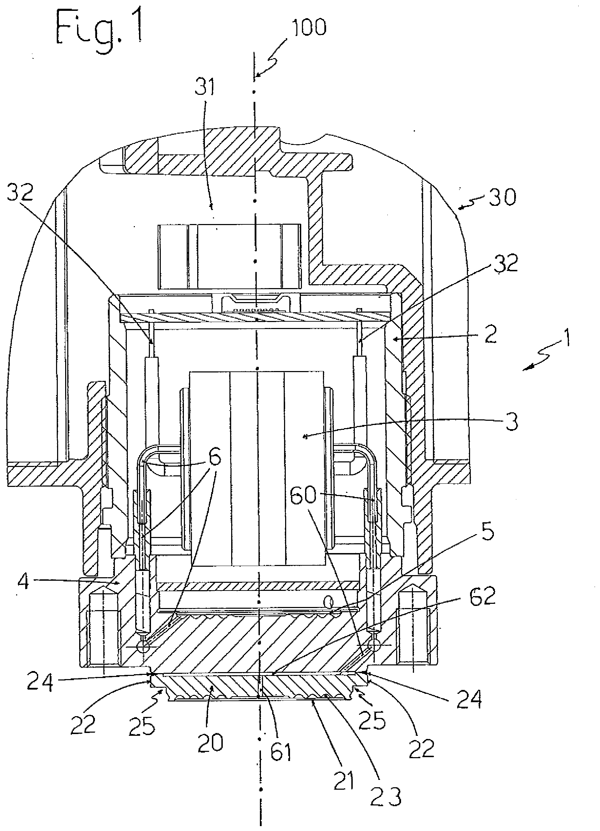

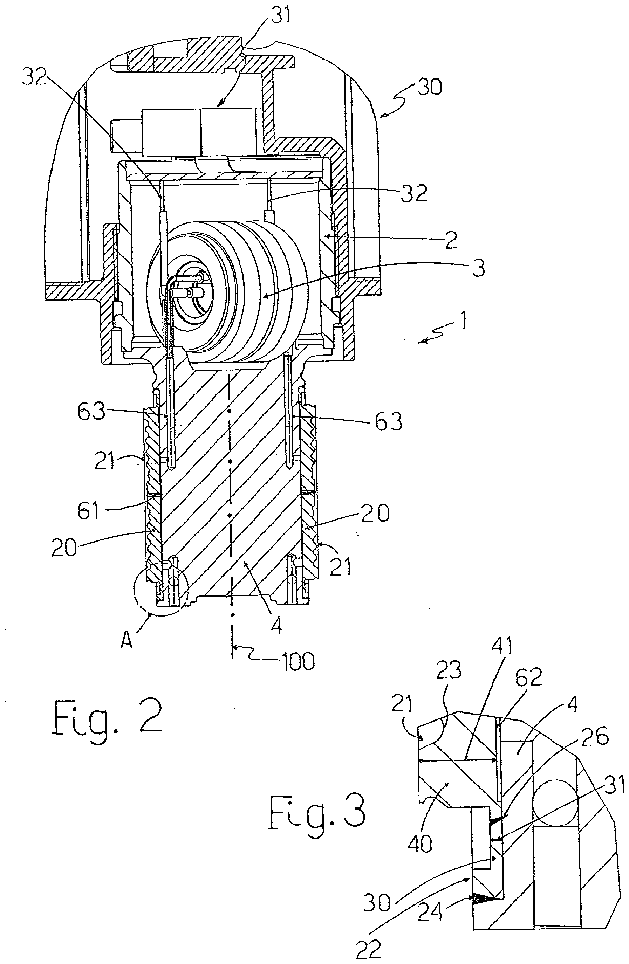

The pressure transmitter according to the present invention is indicated as a whole with the reference numeral 1 in figures 1-2, wherein in figure 1 the pressure transmitter is illustrated in a first embodiment as a gauge pressure transmitter while in figure 2 it is illustrated as a differential pressure transmitter.

As shown, the pressure transmitter 1 comprises a sensor assembly having a hollow main body 2 for housing a sensor, typically a pressure sensor 3 whose structure and functioning, including circuitry, are well known to those skilled in the art and therefore will not be described herein in further details. The hollow main body 2 is made of any suitable material, for example metallic material such as stainless steel.

As schematically illustrated in figures 1 and 2, the pressure transmitter 1 comprises a transmitter body 30 which is suitably connected to the sensor assembly, and in particular to the hollow body 2; the transmitter body 30 houses electric/electronic circuitry 31 which receives input signals from the pressure sensor 3, via connection elements 32, e.g. cables. Typically, the circuitry 31, which usually comprises a microprocessor, elaborates input signals received so as to output a measure of the pressure of a process fluid which is monitored by the pressure transmitter itself 1; for example, the transmitter body 30 can be made of plastic and/or metallic material.

In both embodiments, the pressure transmitter 1 further comprises a support body 4 which is made of a metallic material ("hereinafter first material"), for example a common stainless steel such as AISI 316 L; as schematically shown in the embodiments of figures 1 and 2, the support body 4 is connected to the hollow body 2, e.g. by means of soldering or through screws; alternatively, it would be possible to realize the hollow body 2 and the support body 4 as a unique structurally monolithic piece.

Further, also the transmitter body 30 may be realized in a single piece with the hollow body 2 and shaped so as to have inside space enough to accommodate the circuitry 31 and other components.

Advantageously, the pressure transmitter 1 according to the invention further comprises an interface body 20 which is connected to the support body 4 and is made of metallic material (hereinafter referred to as a "second material") which is different from the first material of the supporting body 4.

In addition, the pressure transmitter 1 comprises at least one isolation diaphragm 21 (hereinafter referred to as the "first isolation diaphragm") which is positioned onto the interface body 20 and is advantageously made of the same material of the interface body.

In particular, the first isolation diaphragm 21 is fixed onto the interface body 20 so as to have (with respect to the interface body 20 itself) its external surface suitable for interfacing with a process fluid the pressure of which has to be measured.

Preferably, the second material of the interface body 20 and of the first isolation diaphragm 21 is selected from the group consisting of: nickel-based alloys, duplex or super-duplex stainless steel materials; according to a particularly preferred embodiment, the interface body 20 and the isolation diaphragm 21 are made of nickel-based alloys commercially known as MONEL 400 or MONEL K500.

Preferably, the first isolation diaphragm 21 is welded, more preferably laser welded, onto the support interface body 20.

The interface body 20 can be differently shaped according to various applications; for instance, may be ring-shaped, disc shaped, or might have a substantial fully solid body, e.g. a full cylinder body.

For instance, in the embodiment illustrated in figure 1, the interface body 20 has a substantially full body provided at one end surface with a corrugated surface 23 on which the first isolation diaphragm 21 is fixed, i.e. laser welded, and with a cross section featuring a step 25.

As illustrated, in this embodiment the interface body 20 is positioned at one end surface of the support body 4 and is connected to the support body 4 itself.

Preferably, the interface body 20 is welded, more preferably laser welded, onto the support body 4 along at least a first welding seam 24.

In particular, according to this embodiment, the interface body 20 is connected to the support body 4 along a surface 22 transversal with respect to the first isolation diaphragm 21 (and parallel to a reference longitudinal axis 100); preferably, the location of the welding seam 24 on the transversal surface 22 along which the interface body 20 is connected to the support body 4 is spaced apart from the first isolation diaphragm 21.

In this way the mechanical characteristics of the diaphragm 21 are not negatively affected by the joining process.

Further, in the embodiment illustrated in figure 1, on the support body 4 there is provided another isolation diaphragm 5 (hereinafter referred to as the "second isolation diaphragm").

The second isolation diaphragm 5 is for example welded, e.g. laser welded, onto the support body 4 and is in fluid communication with the pressure sensor 3 by means of a hydraulic circuit 6 filled with a fluid, preferably an incompressible fluid, such as a silicon oil.

The second isolation diaphragm 5 comprises for example a thin elastic membrane made of metal such as for example AISI 316L, or a suitable nickel-based alloy.

As illustrated in figure 1, also the first isolation diaphragm 21 is in fluid communication with the pressure sensor 3 via a hydraulic circuit 60 which is equivalent to the circuit 6 and is filled with the same or a similar type of incompressible fluid; the hydraulic circuit 60 comprises a section 61, i.e. a through channel 61 provided on the interface body 20, and a thin gap 62 left between the interface body 20 and the support body 4.

Advantageously, the first isolation diaphragm 21 is arranged - e.g. its thickness and size and any other suitable parameters - are selected so as to have along the axis 100 substantially the same linear displacement of that of the second isolation diaphragm 5 when the first and the second isolation diaphragms 21, 5 are subject to substantially the same level of pressure exerted on them by the incompressible fluid of the circuit 6 and by the process fluid, respectively.

In the embodiment illustrated in figures 2 and 3, the interface body 20 has a disc-shaped configuration which is positioned around the support body 4 so as to embrace a portion thereof and has also a corrugated surface 23 on which the first isolation diaphragm 21 is positioned.

Preferably, according to this embodiment, there are provided two isolation diaphragms 21 which are fixed, i.e. laser welded, onto the corrugated surface 23 so as each of them has its external surface suitable for interfacing with the process fluid whose pressure has to be measured.

In this case both isolation diaphragms 21 are made of the same material of the interface body 20, namely, a second material selected from the group consisting of: nickel-based alloys, duplex or super-duplex stainless steel materials, preferably a nickel-based alloys commercially known as MONEL 400 or MONEL K500.

As illustrated, the two isolation diaphragms 21 are fixed onto the interface body 20 opposite to each other with respect to the reference longitudinal axis 100 and extend substantially parallel to the axis 100 itself, while in the embodiment of figure 1 the isolation diaphragm 21 (and the second isolation diaphragm 5 as well) is positioned transversal with respect to the longitudinal axis 100.

The two isolation diaphragms 21 are in fluid communication with the pressure sensor 3 via a hydraulic circuit (equivalent to that illustrated in figure 1) which is filled with an incompressible fluid, such as a silicon oil, and comprises (for each side) a through channel 61, a thin gap 62 and passageways 63 provided onto the support body 4.

Preferably, also in this case the interface body 20 is welded, more preferably laser welded, onto the support body 4.

In particular, according to this embodiment, the interface body 20 is connected to the support body 4 on a surface 22 substantially parallel to the couple of first isolation diaphragms 21 along a first welding seam 24 which is spaced apart from the isolation diaphragms 21 themselves.

In this way the mechanical characteristics of the diaphragm 21 are not negatively affected by the joining process.

According to a particularly preferred embodiment illustrated in more details in figure 3, the interface body 20 (seen in cross-section) comprises a first portion 30 and a second portion 40, wherein the first portion has a thickness 31 smaller than the thickness 41 of the second portion 40; the interface body 20 is welded onto the support body 4 also along a second welding seam 26 located at the first portion 30 and spaced apart from the first welding seam 24 (and the isolation diaphragms themselves).

In practice, when the pressure transmitter is mechanically connected to a pipe of the process, e.g. by means of one or more flanges, the first portion 30 forms a thin flexible rim which allows absorbing possible deformations and therefore reducing consequent error measurements induced by this mechanical connection.

The same result may be achieved by suitably sizing the step 25 of the interface body 20 illustrated in figure 1.

In practice, it has been seen how the pressure transmitter 1 according to the invention allows achieving the intended object offering some improvements over known solutions. In particular, the purposive introduction of the interface body 20 and the selection of the same material for the interface body 20 and the isolation diaphragm(s) 21 allow to realize a junction between these two elements which does not lead to a deterioration of the characteristics of the interfacing isolation diaphragm, thus preventing problems of corrosion inception typical of prior art solutions.

The pressure transmitter 1 thus conceived may undergo numerous modifications and variants all coming within the scope of the inventive concept as specified by the appended claims. For example, the interface body 20, and/or the support body 4 can have a different shape or size, the hydraulic circuits 6, 60 can be differently shaped, et cetera, provided that such possible modifications are compatible with the functions the various elements are required to perform.

Moreover, all parts/components can be replaced with other technically equivalent elements; in practice, the type of materials within the scope of the foreseen applications described above, and the dimensions, can be any according to needs and to the state of the art.

## Claims

1. A pressure transmitter (1) comprising:
- a sensor assembly having a hollow body (2) housing a pressure sensor (3);
- a support body (4) which is made of a first material;
**characterized in that** it further comprises:
- an interface body (20) which is connected to said support body (4) and is made of a second material different from said first material; and
- at least a first isolation diaphragm (21) which is fixed onto said interface body, said first isolation diaphragm being in fluid communication with said pressure sensor and suitable for interfacing with a process fluid, wherein said first isolation diaphragm is made of said second material.

2. Pressure transmitter according to claim 1, **characterized in that** said interface body is connected to said support body on a surface (22) transversal with respect to said first isolation diaphragm.

3. Pressure transmitter according to claim 1, **characterized in that** said interface body is connected to said support body on a surface (22) substantially parallel to said first isolation diaphragm.

4. Pressure transmitter according to one or more of the previous claims, **characterized in that** said interface body is welded onto said support body along at least a first welding seam (24) provided on said surface (22) which is spaced apart from said first isolation diaphragm.

5. Pressure transmitter according to one or more of the previous claims, **characterized in that** it comprises a second isolation diaphragm (5) which is placed on said support body (4) and is in fluid communication with said pressure sensor, said first isolation diaphragm being arranged so as to have substantially the same linear displacement of said second isolation diaphragm when said first and second isolation diaphragms are subject to substantially the same level of pressure.

6. Pressure transmitter according to claim 5, **characterized in that** said second isolation diaphragm is welded onto said support body.

7. Pressure transmitter according to one or more of claims 1 to 4, **characterized in that** it comprises a second isolation diaphragm (21) which is fixed onto said interface body, said second isolation diaphragm being in fluid communication with said pressure sensor and suitable for interfacing with a process fluid, wherein said second isolation diaphragm is made of said second material.

8. Pressure transmitter according to one or more of the previous claims, **characterized in that** said interface body has a corrugated surface (23) on which at least said first isolation diaphragm is welded.

9. Pressure transmitter according to one or more of the previous claims, **characterized in that** said interface body has a disc-shaped body embracing said support body (4) and comprising a first portion (30) and a second portion (40), wherein said first portion (30) has a thickness (31) smaller than the thickness (41) of said second portion (40).

10. Pressure transmitter according to claim 9, **characterized in that** said interface body is welded onto said support body along a second welding seam (26) located at said first portion (30) and spaced apart form said first welding seam (24).

11. Pressure transmitter according to one or more of the previous claims, **characterized in that** said interface body and at least said first isolation diaphragm are made of said second material which is selected from the group consisting of: nickel-based alloys, duplex or super-duplex stainless steels.

## Patentansprüche

1. Druckmessumformer (1), aufweisend:
- eine Sensorgruppe mit einem Hohlkörper (2), in dem sich ein Drucksensor (3) befindet;
- einen Tragekörper (4), der aus einem ersten Material besteht;
**dadurch gekennzeichnet, dass** er ferner aufweist:
- einen Zwischenkörper (20), der mit dem Tragekörper (4) verbunden ist und aus einem zweiten Material besteht, das sich von dem ersten Material unterscheidet; und
- zumindest ein erstes Isolationsdiaphragma (21), das an dem Zwischenkörper befestigt ist, wobei das erste Isolationsdiaphragma mit dem Drucksensor in Fluidkommunikation steht und geeignet ist, mit einem Prozessfluid zusammenzuwirken, wobei das erste Isolationsdiaphragma aus dem zweiten Material besteht.

2. Druckmessumformer nach Anspruch 1, **dadurch gekennzeichnet, dass** der Zwischenkörper mit dem Tragekörper auf einer Oberfläche (22) verbunden ist, die in Bezug auf das erste Isolationsdiaphragma quer liegt.

3. Druckmessumformer nach Anspruch 1, **dadurch gekennzeichnet, dass** der Zwischenkörper mit dem Tragekörper auf einer Oberfläche (22) verbunden ist, die im Wesentlichen parallel zu dem ersten Isolationsdiaphragma ist.

4. Druckmessumformer nach einem oder mehreren der vorgenannten Ansprüche, **dadurch gekennzeichnet, dass** der Zwischenkörper entlang zumindest einer ersten Schweißnaht (24), die sich auf der Oberfläche (22) befindet, die von dem ersten Isolationsdiaphragma beabstandet ist, auf den Tragekörper geschweißt ist.

5. Druckmessumformer nach einem oder mehreren der vorgenannten Ansprüche, **dadurch gekennzeichnet, dass** er ein zweites Isolationsdiaphragma (5) aufweist, das auf dem Tragekörper (4) platziert ist und sich mit dem Drucksensor in Fluidkommunikation befindet, wobei das erste Isolationsdiaphragma so angeordnet ist, dass es im Wesentlichen dieselbe lineare Verdrängung des zweiten Isolationsdiaphragmas aufweist, wenn die ersten und zweiten Isolationsdiaphragmen im Wesentlichen demselben Druck ausgesetzt sind.

6. Druckmessumformer nach Anspruch 5, **dadurch gekennzeichnet, dass** das zweite Isolationsdiaphragma auf den Tragekörper geschweißt ist.

7. Druckmessumformer nach einem oder mehreren der Ansprüche 1 bis 4, **dadurch gekennzeichnet, dass** er ein zweites Isolationsdiaphragma (21) aufweist, das an dem Zwischenkörper befestigt ist, wobei sich das zweite Isolationsdiaphragma mit dem Drucksensor in Fluidkommunikation befindet und geeignet ist, mit einem Prozessfluid zusammenzuwirken, wobei das zweite Isolationsdiaphragma aus dem zweiten Material besteht.

8. Druckmessumformer nach einem oder mehreren der vorgenannten Ansprüche, **dadurch gekennzeichnet, dass** der Zwischenkörper eine geriffelte Oberfläche (23) aufweist, auf die zumindest das erste Isolationsdiaphragma geschweißt ist.

9. Druckmessumformer nach einem oder mehreren der vorgenannten Ansprüche, **dadurch gekennzeichnet, dass** der Zwischenkörper einen scheibenförmigen Körper aufweist, der den Tragekörper (4) umfasst und einen ersten Abschnitt (30) und einen zweiten Abschnitt (40) aufweist, wobei der erste Abschnitt (30) eine Dicke (31) aufweist, die geringer ist als die Dicke (41) des zweiten Abschnitts (40).

10. Druckmessumformer nach Anspruch 9, **dadurch gekennzeichnet, dass** der Zwischenkörper entlang einer zweiten Schweißnaht (26), die sich an dem ersten Abschnitt (30) befindet und von der ersten Schweißnaht (24) beabstandet ist, auf den Tragekörper geschweißt ist.

11. Druckmessumformer nach einem oder mehreren der vorgenannten Ansprüche, **dadurch gekennzeichnet, dass** der Zwischenkörper und zumindest das erste Isolationsdiaphragma aus dem zweiten Material bestehen, das aus der Gruppe ausgewählt ist, die aus Folgendem besteht: nickelbasierte Legierungen, Duplex- oder Super-Duplex-Edelstähle.

## Revendications

1. Transmetteur de pression (1) comprenant :
- un ensemble capteur ayant un corps creux (2) recevant un capteur de pression (3) ;
- un corps de support (4) qui est réalisé en un premier matériau ;
**caractérisé en ce qu'**il comprend en outre :
- un corps d'interface (20) qui est relié audit corps de support (4) et est réalisé en un deuxième matériau différent dudit premier matériau ; et
- au moins un premier diaphragme d'isolation (21) qui est fixé sur ledit corps d'interface, ledit premier diaphragme d'isolation étant en communication fluidique avec ledit capteur de pression et approprié pour servir d'interface avec un fluide de traitement, dans lequel ledit premier diaphragme d'isolation est réalisé en ledit deuxième matériau.

2. Transmetteur de pression selon la revendication 1, **caractérisé en ce que** ledit corps d'interface est relié audit corps de support sur une surface (22) transversale par rapport audit premier diaphragme d'isolation.

3. Transmetteur de pression selon la revendication 1, **caractérisé en ce que** ledit corps d'interface est relié audit corps de support sur une surface (22) essentiellement parallèle audit premier diaphragme d'isolation.

4. Transmetteur de pression selon une ou plusieurs des revendications précédentes, **caractérisé en ce que** ledit corps d'interface est soudé sur ledit corps de support le long d'au moins un premier cordon de soudure (24) prévu sur ladite surface (22) qui est espacée dudit premier diaphragme d'isolation.

5. Transmetteur de pression selon une ou plusieurs des revendications précédentes, **caractérisé en ce qu'**il comprend un deuxième diaphragme d'isolation (5) qui est placé sur ledit corps de support (4) et est en communication fluidique avec ledit capteur de pression, ledit premier diaphragme d'isolation étant agencé de manière à avoir essentiellement le même déplacement linéaire que le deuxième diaphragme d'isolation lorsque lesdits premier et deuxième diaphragmes d'isolation sont soumis à essentiellement le même niveau de pression.

6. Transmetteur de pression selon la revendication 5, **caractérisé en ce que** ledit deuxième diaphragme d'isolation est soudé sur ledit corps de support.

7. Transmetteur de pression selon une ou plusieurs des revendications 1 à 4, **caractérisé en ce qu'**il comprend un deuxième diaphragme d'isolation (21) qui est fixé sur ledit corps d'interface, ledit deuxième diaphragme d'isolation étant en communication fluidique avec ledit capteur de pression et approprié pour servir d'interface avec un fluide de traitement, dans lequel ledit deuxième diaphragme d'isolation est réalisé en ledit deuxième matériau.

8. Transmetteur de pression selon une ou plusieurs des revendications précédentes, **caractérisé en ce que** ledit corps d'interface a une surface ondulée (23) sur laquelle au moins ledit premier diaphragme d'isolation est soudé.

9. Transmetteur de pression selon une ou plusieurs des revendications précédentes, **caractérisé en ce que** ledit corps d'interface a un corps en forme de disque entourant ledit corps de support (4) et comprenant une première partie (30) et une deuxième partie (40), où ladite première partie (30) a une épaisseur (31) inférieure à l'épaisseur (41) de ladite deuxième partie (40).

10. Transmetteur de pression selon la revendication 9, **caractérisé en ce que** ledit corps d'interface est soudé sur ledit corps de support le long d'un deuxième cordon de soudure (26) situé au niveau de ladite première partie (30) et espacé dudit premier cordon de soudure (24).

11. Transmetteur de pression selon une ou plusieurs des revendications précédentes, **caractérisé en ce que** ledit corps d'interface et au moins ledit premier diaphragme d'isolation sont réalisés en ledit deuxième matériau qui est choisi dans le groupe constitué : d'alliages à base de nickel, d'aciers inoxydables duplex ou super-duplex.
